# EUROPÄISCHE PATENTSCHRIFT

(11) **EP 2 941 582 B1**
(45) Veröffentlichungstag und Bekanntmachung des Hinweises auf die Patenterteilung: **02.01.2019**
(21) Anmeldenummer: 13796080.3
(22) Anmeldetag: 28.11.2013
(51) Int. Cl.: F16L 21/00, F16L 21/02, F16L 17/06, F16L 55/11

(54) **HYDRAULIKVERBINDUNGSBUCHSE, HYDRAULIKVERBINDUNG UND HYDRAULIKSTOPFEN**
HYDRAULIC CONNECTING BUSH, HYDRAULIC CONNECTION, AND HYDRAULIC PLUG
MANCHON DE RACCORDEMENT HYDRAULIQUE, RACCORD HYDRAULIQUE ET BOUCHON HYDRAULIQUE

(30) Priorität: 02.01.2013 DE 102013000014
(43) Veröffentlichungstag der Anmeldung: 11.11.2015
(73) Patentinhaber: ABB Schweiz AG, 5400 Baden (CH)
(72) Erfinder: SCHMIDT, Matthias, 60596 Frankfurt (DE); BOHLÄNDER, Joachim, 63538 Grosskrotzenburg (DE)
(74) Vertreter: ABB Patent Attorneys
(86) Internationale Anmeldenummer: PCT/EP2013/074929
(87) Internationale Veröffentlichungsnummer: WO 2014/106551

(56) Entgegenhaltungen:
- EP-A1- 2 385 276
- DE-A1- 4 324 362
- DE-B- 1 295 936
- GB-A- 2 415 233
- US-A- 5 165 704

## Beschreibung

Die Erfindung betrifft eine Hydraulikverbindungsbuchse zur Verbindung von Hydraulikleitungen z. B. für hydraulische Leistungsschalterantriebe, umfassend einen hohlzylindrischen Grundkörper mit wenigstens zwei auf dessen äußerer Mantelfläche umlaufenden Ringnuten mit darin eingesetzten Dichtringen. Die Erfindung betrifft außerdem eine Hydraulikverbindung umfassend wenigstens eine erste und eine zweite Hydraulikleitung für Leistungsschalterantriebe mit einer erfindungsgemäßen Verbindungsbuchse, wobei die Hydraulikleitung aus einem Material mit einem zweiten Elastizitätsmodul gefertigt ist und wobei die Verbindungsbuchse überlappend in die stirnseitig aneinander anliegenden Hydraulikleitungen eingesetzt ist. Zusätzlich ist ein Hydraulikstopfen zum Verschluss einer offenen Hydraulikleitung z.B. für hydraulische Leistungsschalterantriebe offenbart, umfassend einen zylindrischen Grundkörper gebildet aus einem ersten hohlzylindrischen Bereich und einem axial angrenzenden zweiten zylindrischen Verschlussbereich. Der Grundkörper umfasst zusätzlich eine um den ersten hohlzylindrischen Bereich umlaufende Ringnut.
Eine Verbindung von Hydraulikleitungen kann durch unterschiedliche konstruktive Lösungen realisiert werden. Beispielsweise ist eine Dichtung mit axial dichtenden Dichtringen bekannt. Eine weitere Möglichkeit besteht darin, Verbindungsbuchsen mit radial dichtenden Dichtringen zu verwenden. Bei dieser Ausführung werden üblicherweise Dichtringe in Radialnuten der Verbindungsbuchsen eingesetzt, wobei die Dichtringe zumeist von Stützringen gestützt werden, wie nachfolgend beschrieben ist. Eine Beispielausführung ist aus den Dokumenten US5165704A1 oder DE1295936B1 bekannt. Die bekannten Verbindungsverfahren können bei stark pulsierendem Druck keine Dichtfunktion sicherstellen oder sind nur umständlich montierbar. Für axial dichtende Dichtringe trifft ersteres zu, diese können für hohe oder stark pulsierende Drücke keine Dichtfunktion sicherstellen. Für Verbindungsbuchsen mit radial dichtenden Dichtringen hat es sich als ungünstig herausgestellt, dass diese nur umständlich montierbar sind. Bei der Montage können die Dichtflächen der Druckleitungen leicht beschädigt werden. Dieses ist darauf zurückzuführen, dass die harte Buchse leicht in Kontakt mit den Dichtflächen der Druckleitungen kommen kann. Um die Verbindungsbuchse beschädigungsfrei einsetzen zu können, ist ein Spalt zwischen dieser und der Hydraulikleitung vorgesehen. In diesen Spalt kann jedoch ein Dichtring extrudiert werden. Extrusion bedeutet, dass ein Dichtring in einen niederdruckseitigen Spalt gepresst und somit zerstört wird, wodurch eine Dichtfunktion der Verbindung nicht mehr sicher gegeben ist. Um eine Extrusion des Dichtringes zu vermeiden, werden bei den Verbindungsbuchsen des Stands der Technik neben den Dichtringen zusätzlich Stützringe in die Ringnuten eingesetzt, welche den jeweiligen Spalt im Bereich um die Nut zumindest reduzieren und so eine Extrusion verhindern Als nachteilig hat sich jedoch herausgestellt, dass für die Montage der Stützringe ein zusätzlicher Montageaufwand nötig ist. Weiter nachteilhaft ist, dass die Stützringe bei der Montage vergessen oder falsch montiert werden können. Aufgrund der genannten Nachteile zeigen Verbindungsbuchsen mit axial dichtenden Dichtringen während der Montage eine gewisse Fehleranfälligkeit, woraus auch eine Fehleranfälligkeit der Verbindung im Betrieb resultiert.
Ähnliche Nachteile zeigen sich auch bei Hydraulikstopfen des Stands der Technik. Hydraulikstopfen werden in offene Hydraulikleitungen eingesetzt und verschließen diese. Vergleichbar mit Hydraulikverbindungsbuchsen sind auch Hydraulikstopfen aus einem zylindrischen Grundkörper mit wenigstens einer auf dessen äußerer Mantelfläche umlaufenden Ringnuten gefertigt, in welche jeweils auch ein Dichtring eingesetzt ist. Im Stand der Technik sind auch bei Hydraulikstopfen niederdruckseitig vor dem Dichtring Stützringe eingesetzt, welche eine Extrusion des Dichtringes verhindern. Im Gegensatz zu dem zylindrischen Grundkörper einer Hydraulikverbindungsbuchse ist der zylindrische Grundkörper eines Hydraulikstopfens an einer Stirnseite geschlossen, um ein Austreten des hydraulischen Mediums zu vermeiden. Hydraulikstopfen müssen in Axialrichtung gegenüber der Hydraulikleitung fixiert werden, um diesen auch bei einer Beaufschlagung der Hydraulikleitung mit Innendruck zu fixieren.

Der Erfindung liegt daher die Aufgabe zugrunde eine Hydraulikverbindung anzugeben, welche eine Dichtfunktion auch bei hohen und pulsierenden Drücken sicherstellt, sich aber einfacher montieren lässt.

Erfindungsgemäß wird die voranstehende Aufgabe durch eine Hydraulikverbindung umfassend eine Hydraulikverbindungsbuchse der eingangs genannten Art gelöst. Diese ist gekennzeichnet durch die Merkmale des Anspruchs 1. In Abkehr zum Stand der Technik werden die Stützringe bei der erfindungsgemäßen Hydraulikverbindungsbuchse nicht mehr benötigt. Stattdessen ist eine sich unter Druck aufweitende Hydraulikverbindungsbuchse vorgesehen, welche die bisherige Verbindungsbuchse ersetzt und zusätzlich die Funktion der Stützringe übernimmt. Es kann daher in vorteilhafterweise auf die Verwendung von Stützringen verzichtet werden wodurch zusätzlich Montagefehler ausgeschlossen sind und Aufwand gespart wird.
Durch geeignete Wahl der Elastizitätsmodule des Grundkörpers und der umfassenden Hydraulikleitungen ist eine Aufweitung der Hydraulikverbindungsbuchse unter Innendruckbeaufschlagung bewirkt und ein montagebedingter Spalt zwischen hohlzylindrischem Grundkörper und innerer Mantelfläche der Hydraulikleitung geschlossen, oder zumindest soweit reduziert, dass ein Dichtring nicht in diesen Spalt extrudiert und damit beschädigt werden kann. Der Grundkörper weitet sich erst ab einer Beaufschlagung mit einem Druck ab einem hydraulischen Druck von 50 bar, soweit auf, dass der Spalt geschlossen wird. Der Spalt zwischen Grundkörper und Hydraulikleitung ist deshalb konstruktiv so eng ausgelegt, dass ein Dichtring auch bei niedrigerem Druck nicht in den Spalt extrudiert wird.
Bei niedrigem hydraulischem Druck wirkt sowohl auf den Dichtring selber, als auch auf den Grundkörper ein entsprechend geringer Druck. In diesem Fall ist der Dichtring ausreichend in der Ringnut gehalten und extrudiert damit nicht in den in diesem Fall vergleichsweise großen Spalt. Ansteigender hydraulischer Druck bewirkt eine Zunahme des Drucks sowohl auf den Dichtring selber als auch auf den Grundkörper. Der auf den Dichtring wirkende Druck drückt diesen in Richtung des Spaltes. Der Grundkörper weitet sich bei sämtlichen Druckverhältnissen soweit auf, dass der Spalt immer ausreichend klein ist um eine Extrusion des Dichtringes zu verhindern. Insgesamt ist daher eine sichere Dichtwirkung sowohl bei sehr niedrigem Druck, als auch bei sehr hohem Druck bewirkt. Dabei kann auf die bisher notwendigen Stützringe verzichtet werden.
Entsprechend einer vorteilhaften Variante sind die Achsen der Ringnuten der Hydraulikverbindungsbuchse deckungsgleich angeordnet. Durch diese konkrete Ausgestaltung können zwei Hydraulikleitungen fluchtend miteinander verbunden werden und die Stirnseiten der Hydraulikleitungen können direkt aneinander geflanscht werden. Der hohlzylindrische Grundkörper ist aus einem Material mit einer ausreichend großen Bruchdehnung gefertigt, so dass auch bei mehrmaligem Anlegen an die Hydraulikleitungen eine Beschädigung vermieden ist.

Weiter ist der hohlzylindrische Grundkörper aus einem Kunststoff gefertigt. Da die den Grundkörper umfassenden Druckleitungen erfindungsgemäß aus einem härteren Material, üblicherweise einem Metall, gefertigt sind, ist zumeist auch eine höhere Oberflächenhärte des Materials gegeben. Eine Beschädigung der inneren Mantelflächen der Druckleitungen durch das Einsetzen des Grundkörpers ist damit vermieden. Der Kunststoff weist eine chemische Beständigkeit auf, die gegebenenfalls durch Additive angepasst wurde und bietet zusätzlich konstruktive Freiheit in der Gestaltung des Grundkörpers.

Gemäß einer weiteren vorteilhaften Variante ist der hohlzylindrische Grundkörper aus erosionsfestem Werkstoff gefertigt, beispielsweise Polyamid. Hierdurch ist verhindert, dass das strömende hydraulische Medium den Grundkörper während des Betriebes auflöst oder abträgt. Dieses trägt wiederum zu einer langen Betriebsdauer der Hydraulikverbindung bei.

Erfindungsgemäß ist optional vorgesehen, den hohlzylindrische Grundkörper als eine von Kunststoff umspritzte Metallbuchse zu fertigen. Durch eine eingesetzte Metallbuchse ist der Grundkörper stabiler und die Beständigkeit gegen mechanische Beanspruchung durch das strömende Fluid erhöht. Durch das Umspritzen mit Kunststoff lässt sich zusätzlich ein richtungsabhängiges Materialverhalten des Grundkörpers erzeugen.

Entsprechend ist der hohlzylindrische Grundkörper als Spritzgussteil gefertigt, wodurch der Grundkörper aufwandsarm als Massenprodukt hergestellt werden kann. Durch dieses Fertigungsverfahren lässt sich eine ausreichende Oberflächengüte, idealerweise bereits ohne zusätzliche Nachbehandlung erreichen.

Bevorzugter Weise werden als Dichtringe genormte Dichtringe verwendet. Durch die Verwendung von Normteilen lässt sich die Verbindung insgesamt besonders einfach herstellen. Vorteilhaft sind die Ringnuten der hohlzylindrischen Grundkörper so gefertigt, dass die genormten Dichtringe unter einer gewissen Zugspannung in den Ringnuten anliegen und dadurch sicher gehalten sind.

Gemäß einer vorteilhaften Ausgestaltung ist die Oberfläche des hohlzylindrischen Grundkörpers glättend bearbeitet, dadurch ist die Oberflächenrauheit bedarfsweise verringert. Insbesondere die Oberflächenrauheit der Anlagefläche des Dichtringes in der Ringnut ist so auszugestalten, dass zwischen Dichtring und Ringnut eine dichte Verbindung bewirkt ist. Als glättende Oberflächenbehandlung kann beispielsweise Schleifen, Polieren, Honen, Läppen oder Schlichten angewendet werden.

Eine Hydraulikverbindungsbuchse ist in hervorragender Art und Weise für Hydraulikverbindungen von Leistungsschalterantrieben geeignet. Eine derartige Hydraulikverbindung umfasst wenigstens eine erste und eine zweite Hydraulikleitung für Leistungsschalterantriebe und eine Verbindungsbuchse. Die Hydraulikleitung ist aus einem Material mit einem zweiten Elastizitätsmodul gefertigt und die Verbindungsbuchse ist überlappend in die stirnseitig aneinander anliegenden Hydraulikleitungen eingesetzt, wobei ein Spalt zwischen dem Grundkörper und den Hydraulikleitungen gebildet ist. Hierbei umschließen die erste und die zweite Hydraulikleitung jeweils wenigstens einen Dichtring. Durch diese Ausführungsform resultiert unabhängig vom Systemdruck durch die umschlossenen Dichtringe eine Dichtwirkung. Die Verbindungsbuchse umfasst eine bereits beschriebene Hydraulikverbindungsbuchse, bei welcher das erste Material des hohlzylindrischen Grundkörpers ein kleineres Elastizitätsmodul als das zweite Material der Hydraulikleitungen aufweist. Durch geeignete Wahl der Elastizitätsmodule ergibt sich bei Beaufschlagung der Hydraulikverbindung mit einem Innendruck eine stärkere Aufweitung des hohlzylindrischen Grundkörpers als der Hydraulikleitungen, wodurch ein Anlegen des Grundkörpers an die Hydraulikleitungen erreicht ist. Der Spalt im Bereich der eingesetzten Dichtringe ist in diesem Fall geschlossen, womit die Dichtringe nicht in den Spalt extrudiert werden können. Damit kann auf die bisher benötigten Stützringe verzichtet werden. Daraus resultiert eine einfachere Montage, wodurch die Gefahr von Montagefehlern signifikant reduziert ist. Da weniger Teile montiert werden müssen und damit auch weniger Teile im Betrieb sind, ergibt sich zusätzlich eine höhere Betriebssicherheit.

Die Elastizitätsmodule des ersten und des zweiten Materials sind derart ausgewählt, dass sich ein Verhältnis der Elastizitätsmodule einstellt, bei welchem unter einer Innendruckbeaufschlagung der Hydraulikverbindung die äußere Mantelfläche des Grundkörpers zumindest teilweise an die innere Mantelfläche der Hydraulikleitungen angelegt wird. Insbesondere an den Anlageflächen, die in Erstreckungsrichtung jeweils innen von den Dichtringen angeordnet sind, ist ein Anlegen des Grundkörpers bewirkt, damit dieser die Funktion der Stützringe übernehmen kann.

Die Hydraulikverbindungsbuchse ist überlappend in jeweils eine stirnseitige Bohrung der Hydraulikleitungen eingesetzt, wobei die jeweilige Bohrung koaxial zu der jeweiligen Hydraulikleitung angeordnet ist. Die Hydraulikverbindungsbuchse ist derart überlappend einzusetzen, dass jede Bohrung mindestens einen Dichtringüberdeckt. Aufgrund der koaxial angeordneten Bohrungen resultiert bei dem Anlegen des Grundkörpers ein gleichmäßiger Druck auf die Hydraulikleitungen und damit wiederum ein gleichmäßiger Gegendruck auf den hohlzylindrischen Grundkörper.

Vorteilhaft ist der Innendurchmesser der jeweiligen Bohrung der Hydraulikleitungen auf den Außendurchmesser der Hydraulikverbindungsbuchse angepasst. Eine Anpassung der Durchmesser bedeutet, dass das Spiel zwischen Außen-, und Innendurchmesser so groß gewählt sein muss, dass die Hydraulikverbindungsbuchse in die jeweilige Bohrung der Hydraulikleitungen beschädigungsfrei eingeführt werden kann. Zusätzlich bedeutet eine Anpassung, dass die Durchmesser so eng zueinander zu tolerieren sind, dass sich der Grundkörper auch bei niedrigem Systemdruck, bei 50 bar, aufweitet und anlegt, wodurch verhindert ist, dass ein Dichtring extrudiert wird.
Bevorzugter Weise weist die Bohrung der jeweiligen Hydraulikleitung eine Fase auf. Um Schäden während der Montage zu verhindern, sollte vermieden werden die Dichtringe über scharfe Kanten zu ziehen. An den Bohrungen und an den weiteren Kanten sind daher Fasen oder Einfuhrschrägen mit einem beispielhaften Winkelbereich von 10° bis 40° zur axialen Erstreckungsrichtung vorzusehen. Scharfe Kanten, die durch anderweitige Ausnehmungen entstehen, beispielsweise durch zusätzliche Bohrungen, sind vorzugsweise so auszugestalten, dass die Dichtringe nicht beschädigt werden.

In einer vorteilhaften Ausführungsform der Hydraulikverbindung ist wenigstens eine der Hydraulikleitungen durch einen Hydraulikkanal eines Leistungsschalterantriebes gebildet. Hydraulikkanäle von Leistungsschalterantrieben sind typischerweise aus Stahl oder einem anderen Metall gefertigt und weisen ein höheres Elastizitätsmodul auf als die zu umfassende Hydraulikverbindungsbuchse. Durch diese bevorzugte Ausführungsform lassen sich mit einer Art von Hydraulikverbindungsbuchsen sowohl zwei Hydraulikleitungen, als auch direkt ein Hydraulikkanal eines Leistungsschalterantriebes mit einer Hydraulikleitung verbinden.

Weiter ist ein Beispiel eines Hydraulikstopfens offenbart. Dieser ist so angeordnet, dass der Grundkörper aus einem Material mit einem ersten Elastizitätsmodul gefertigt ist und dass der Hydraulikstopfen dafür vorgesehen ist in eine offene Hydraulikleitung aus einem Material mit einem zweiten Elastizitätsmodul eingesetzt zu werden, wobei ein Spalt zwischen dem Grundkörper und der Hydraulikleitung gebildet ist. Bei kleinerem Elastizitätsmodul des zweiten Materials ist bei Beaufschlagung mit einem Innendruck bewirkt, dass sich der Grundkörper stärker aufweitet als die Hydraulikleitung wodurch der Spalt im Bereich des Dichtringes bei genügend großem Innendruck geschlossen ist. Insbesondere im Bereich zwischen dem Dichtring und dem zylindrischen Verschlussbereich ist ein Schließen des Spaltes bewirkt und verhindert die Extrusion des Dichtringes. Um ein Herausdrücken des Hydraulikstopfens aus der Hydraulikleitung zu verhindern ist dieser dafür vorgesehen zumindest in Axialrichtung gegenüber der Hydraulikleitung fixiert zu werden.
Der Grundkörper, welcher den ersten hohlzylindrische Bereich und den axial angrenzenden zweiten Verschlussbereich umfasst, ist aus einem monolithischen Werkstück gefertigt. Durch die Ausführung des zylindrischen Grundkörpers mit einem ersten hohlzylindrischen Bereich ist der Grundkörper im Bereich der umlaufenden Ringnut dünnwandig ausgeprägt. Aufgrund der Dünnwandigkeit des ersten hohlzylindrischen Bereiches ist ein relativ geringer Innendruck ausreichend um ein Anlegen des Grundkörpers zu bewirken. Bei kleinem Innendruck ist daher auch ein sicheres Anlegen und damit ein Schutz des Dichtringes vor Extrusion bewirkt.

In einem weiteren Beispiel ist der erste Bereich des Grundkörpers vollzylindrisch ausgeführt. In diesem Fall wirkt das hydraulische Medium bei einer Beaufschlagung mit Innendruck auf die der Hydraulikleitung zugewandten Stirnfläche des Grundkörpers. Wegen der axialen Fixierung kann der Grundkörper unter dieser Druckbelastung nicht in Axialrichtung ausweichen. Aufgrund der näherungsweisen Volumenkonstanz des Werkstoffs bei Verformung ist daher zwangsläufig eine radiale Ausdehnung des Grundkörpers bewirkt. Diese Ausdehnung bewirkt wiederum, dass der Spalt zwischen dem Grundkörper und der Hydraulikleitung geschlossen ist und der in die Ringnut eingesetzte Dichtring vor Beschädigung geschützt ist.
Durch die vollzylindrische Ausführung des ersten Bereiches ist ein massiver Grundkörper hergestellt, welcher sich einfach fertigen und montieren lässt. Die axiale Fixierung des Grundkörpers in der stirnseitigen Bohrung lässt sich beispielweise durch eine direkte Verschraubung zwischen Grundkörper und hydraulischer Leitung realisieren. Eine weitere exemplarische konstruktive Lösung besteht darin, die Hydraulikleitung mit einer Abschlussplatte zu verschrauben.
Weitere vorteilhafte Ausgestaltungsmöglichkeiten sind den weiteren abhängigen Ansprüchen zu entnehmen. Anhand der in den Zeichnungen dargestellten Ausführungsbeispiele sollen die Erfindung, weitere Ausführungsformen und weitere Vorteile näher beschrieben werden.

In der Zeichnung zeigen
- Fig. 1: eine exemplarische Hydraulikverbindungsbuchse,
- Fig. 2: eine exemplarische Hydraulikverbindung,
- Fig. 3: eine weitere exemplarische Hydraulikverbindung,
- Fig. 4: ein exemplarisches Hydrauliksystem,
- Fig. 5: einen exemplarischen Hydraulikstopfen,
- Fig. 6: einen weiteren exemplarischen Hydraulikstopfen und
- Fig. 7: einen Ausschnitt einer Hydraulikverbindungsbuchse des Stands der Technik.

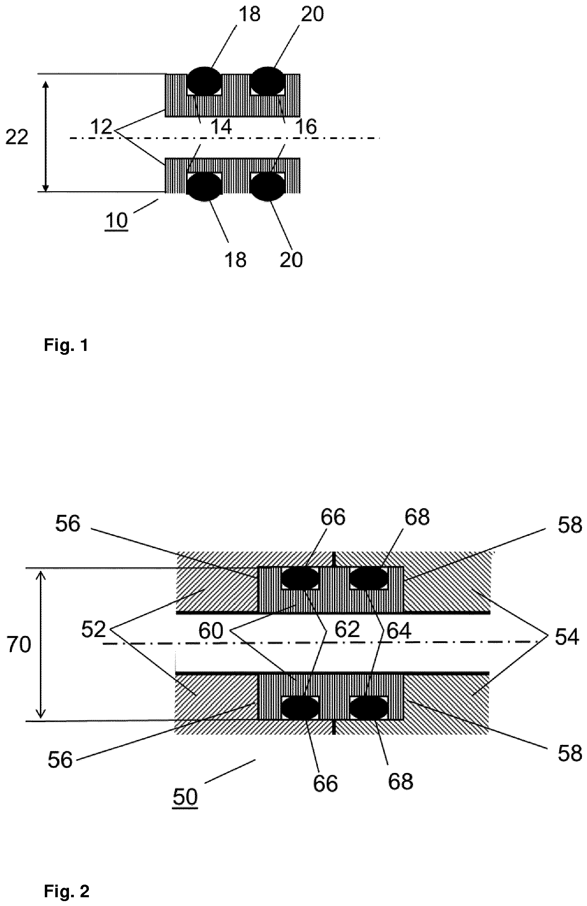

Fig. 1 zeigt eine Hydraulikverbindungsbuchse 10, umfassend einen Grundkörper 12 mit wenigstens zwei auf dessen äußerer Mantelfläche umlaufenden Ringnuten 14, 16 mit darin eingesetzten Dichtringen 18, 20.

Eine Möglichkeit besteht darin, die Nutgeometrie nach dem Stand der Technik auszulegen. In der dargestellten Figur steht der Ringquerschnitt der Dichtringe 18, 20 exemplarisch um 10-20% über den Ringnuten 14, 16 über, um eine Mindestvorpressung im eingebauten Zustand sicherzustellen. Es ist jedoch auch denkbar, dass die Ringquerschnitte der Dichtringe 18, 20 weiter überstehen, beispielsweise um eine sehr hohe Vorpressung zu erzielen. Damit sich ein gleichmäßiger Anpressdruck der Dichtringe 18, 20 ausprägt, kann es vorteilhaft sein, dass sämtliche Dichtringe 18, 20 gleichmäßig über die Ringnuten 14, 16 überstehen und somit gleichmäßig vorgepresst werden.

In der Figur sind die Kanten des Grundkörpers 12 zeichnerisch bedingt nicht abgeschrägt dargestellt. Wie bereits ausgeführt, sollten jedoch Einfuhrschrägen und Fasen vorgesehen werden, um die Dichtringe 18, 20 bei dem Einsetzen nicht zu beschädigen.

Das Material des Grundkörpers 12 der Hydraulikverbindungsbuchse 10 und des Dichtrings 18, 20 ist so zu wählen, dass es gegen das abzudichtende Hydraulikmedium bei den gegebenen Temperaturbereichen beispielsweise zwischen -40°C und + 70°C, beständig ist. Es können daher beispielsweise Kunststoffe eingesetzt werden. Die Oberflächenrauheit des Grundkörpers 12 der Hydraulikverbindungsbuchse 10 ist so zu wählen, dass eine Dichtwirkung zwischen Dichtring 18, 20 und der jeweiligen Ringnut 14, 16 des Grundkörpers 12 bewirkt ist.

Fig. 2. zeigt eine Hydraulikverbindung 50 mit stirnseitig aneinander anliegenden Hydraulikleitungen 52, 54 mit jeweils stirnseitigen Bohrungen 56, 58, wobei der Grundkörper 60 einer Hydraulikverbindungsbuchse, mit eingesetzten Dichtringen 66, 68 überlappend in die stirnseitigen Bohrungen 56, 58 eingesetzt ist. Für die stirnseitige Verbindung der Hydraulikleitungen 52, 54 kann beispielsweise eine, in der Zeichnung nicht dargestellte, Verschraubung verwendet werden. Da die Dichtwirkung über die Dichtringe 66, 68 bewirkt ist, würde auch bei stirnseitigem Abheben weiterhin eine dichte Hydraulikverbindung 50 gegeben sein.

Die Hydraulikverbindungsbuchse liegt unter einer entsprechenden Beaufschlagung mit Druck zumindest teilweise an den umfassenden Hydraulikleitungen 52, 54 an. Der Bereich zwischen den Dichtringen 66, 68 liegt vollständig an den Hydraulikleitungen 52, 54 an und wird von diesen gestützt. Durch das vollständige Anliegen der Hydraulikverbindungsbuchse zwischen den Dichtringen ist eine übermäßige Aufweitung und damit eine Beschädigung des Grundkörpers 60 verhindert.

In die Hydraulikleitungen 52, 54 sind, wie in der Figur dargestellt, stirnseitige Bohrungen 56, 58 eingebracht. Der Grundkörper 60 der Hydraulikverbindungsbuchse wird in diesem Fall in den Böden der Bohrungen 56, 58 axial fixiert. Es ist aber auch denkbar auf die Bohrungen 56, 58 zu verzichten und den Grundkörper 60 der Hydraulikverbindungsbuchse durch vorstehende Nasen in den Hydraulikleitungen 52, 54 in axialer Richtung zu sichern. Durch die Druckdifferenz zwischen dem Druck in der Hydraulikleitung 52, 54 und dem atmosphärischen Druck, der zwischen den Dichtringen 66, 68 anliegt, ist ein Anlegen der Hydraulikverbindungsbuchse auch ohne eine Fixierung zwischen den Bohrungen bewirkt.

Die Auflagefläche zwischen der Stirnseite des Grundkörpers 60 und den Böden der Bohrungen 56, 58 ist ausreichend groß zu wählen um ein Lösen des Grundkörpers 60 aus den umfassenden Bohrungen 56, 58 im Betrieb zu verhindern. Die Oberflächenrauheit in der Ringnut 62, 64und an den Anlageflächen der Dichtringe 66, 68 ist entscheidend für die Funktion der Hydraulikverbindung 50. Die Oberflächenrauheit muss so gewählt sein, dass die Dichtringe 66, 68 sicher dichten, jedoch nicht durch eine zu große Rauheit beschädigt werden.

Bei der konstruktiven Auslegung ist zusätzlich darauf zu achten, dass die Dichtringe 66, 68 mit einer Mindestpressung an den inneren Mantelflächen der Hydraulikleitungen 52, 54 anliegen um eine ausreichende Vorpressung, auch bei geringem hydraulischen Druck, zu erreichen. Im Betrieb setzt sich die Gesamtpressung des Dichtringes 66, 68 aus der statischen Vorpressung zuzüglich einer aus dem hydraulischen Systemdruck resultierenden Pressung zusammen. Der Anteil der Pressung, die aus dem Systemdruck resultiert, ist unter anderem abhängig von der Geometrie der jeweiligen Ringnut 62, 64.

Das Verhältnis des ersten und des zweiten Elastizitätsmoduls hat einen relevanten Einfluss auf die Aufweitung. Das Material des hohlzylindrischen Grundkörpers 12 der Hydraulikverbindungsbuchse ist so zu wählen, dass das Material ein kleineres Elastizitätsmodul als das zweite Material der Hydraulikleitungen 52, 54 aufweist, so dass bei Beaufschlagung der Hydraulikverbindung 50 mit einem Innendruck eine stärkere Aufweitung des hohlzylindrischen Grundkörpers 60 als der Hydraulikleitungen 52, 54 bewirkt ist. Der hohlzylindrische Grundkörper 60 wird bereits bei kleinen Drücken gedehnt und legt sich an die Hydraulikleitungen 52, 54 an. Dadurch wird der Spalt zwischen Grundkörper 60 und den Hydraulikleitungen 52, 54 geschlossen und eine Extrusion des Dichtringes 66, 68 in den Spalt hinter der Dichtung ist vermieden.

Damit eine Beschädigung der Hydraulikleitungen 52, 54 bei dem Einführen des Grundkörpers 60 vermieden ist, muss dieser zudem eine geringere Oberflächenhärte aufweisen. Dieses ist normalerweise durch die erfindungsgemäß geforderte Verwendung von Kunststoff als Grundkörperwerkstoff gegeben. Zusätzlich ist eine ausreichende Bruchdehnung des Grundkörpermaterials nötig, damit sich der Grundkörper ausreichend ausweiten und an die Hydraulikleitung 52, 54 anlegen kann, ohne beschädigt zu werden. Der Werkstoff des Grundkörpers 60 muss zusätzlich ausreichend erosionsfest sein, um nicht von dem strömenden Hydraulikmedium abgetragen zu werden. Die genannten Anforderungen können von verschiedenen Kunststoffen, erfüllt werden.

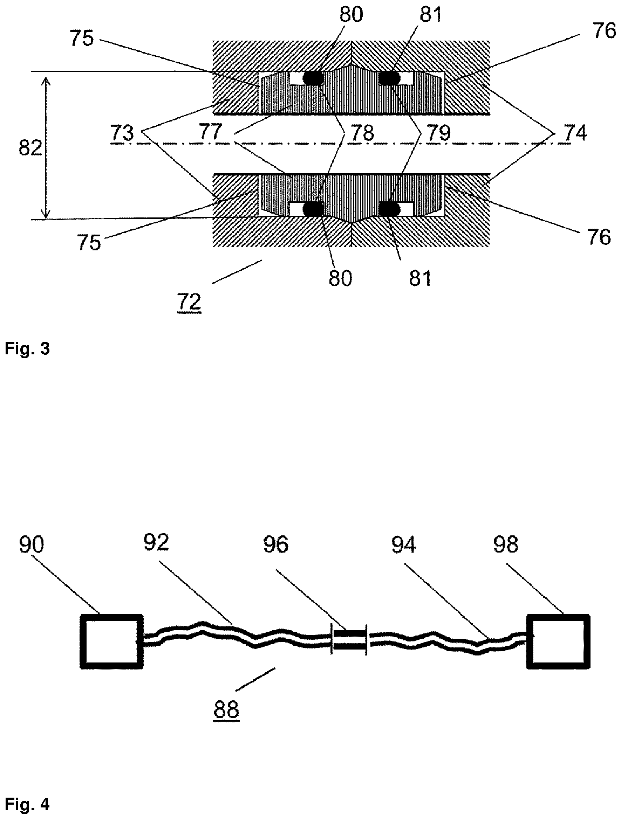

Fig. 3. zeigt eine weitere bevorzugte Ausführungsform der Hydraulikverbindung 72. Die Hydraulikleitungen 73, 74 liegen wiederum stirnseitig aneinander an, mit jeweils stirnseitigen Bohrungen 75, 76, wobei der Grundkörper 77 einer Hydraulikverbindungsbuchse mit eingesetzten Dichtringen 80, 81 überlappend in die stirnseitigen Bohrungen 75, 76 eingesetzt ist.

An den stirnseitigen Bohrungen 75, 76 der jeweiligen Hydraulikleitung 73, 74 ist eine Fase längs zur Rotationsachse des Grundkörpers 77 vorgesehen. Durch die jeweilige Fase ist eine Beschädigung der Dichtringe 80, 81 beim Einführen der Hydraulikverbindungsbuchse vermieden. Nach dem stirnseitigen Aneinanderfügen der Hydraulikleitungen 73, 74, entsteht an der inneren Mantelfläche eine nutförmige Ausnehmung in der Form der aneinandergesetzten Fasen. Der Grundkörper 77 ist zumindest zwischen den Dichtringen 80, 81 angepasst auf die aneinandergesetzten Hydraulikleitungen 73, 74. Dadurch ist bewirkt, dass dieser zwischen den Dichtringen 80, 81 vollständig an den Hydraulikleitungen 73, 74 anliegt, wodurch bei Aufweitung eine Beschädigung vermieden ist.

Zwischen der jeweiligen Stirnseite des Grundkörpers 77 und dem jeweiligen Boden der stirnseitigen Bohrung 75, 76 ist ein Spalt vorgesehen. Ein hydraulisches Medium strömt daher bis zur Außenseite des jeweiligen Dichtringes 80, 81. Die Wirkfläche, für die sich ausbildende Druckdifferenz ist damit die Mantelfläche des Grundkörpers 77 zwischen den Dichtringen 80, 81.

Fig. 4 zeigt exemplarisch die wichtigsten Komponenten eines exemplarischen Hydrauliksystems 88. Das Hydrauliksystem 88 umfasst eine hydraulische Quelle 90, aus welcher eine Hydraulikleitung 92 abgeht und als hydraulische Senke einen Leistungsschalterantrieb 98, aus welchem wiederum eine Hydraulikleitung 94 abgeht. Die beiden Hydraulikleitungen 92, 94 sind über eine erfindungsgemäße Hydraulikverbindung 96 miteinander verbunden.

Es lassen sich sämtliche handelsüblichen Dichtringe verwenden, die dem betriebsmäßig hohen Druck standhalten und gegen das hydraulische Medium beständig sind. Hydraulikverbindungen haben typischerweise einen Außendurchmesser in einem Bereich zwischen 10 mm und 50 mm und eine Länge zwischen 30 und 100 mm, es sind jedoch auch abweichende Abmessungen denkbar.

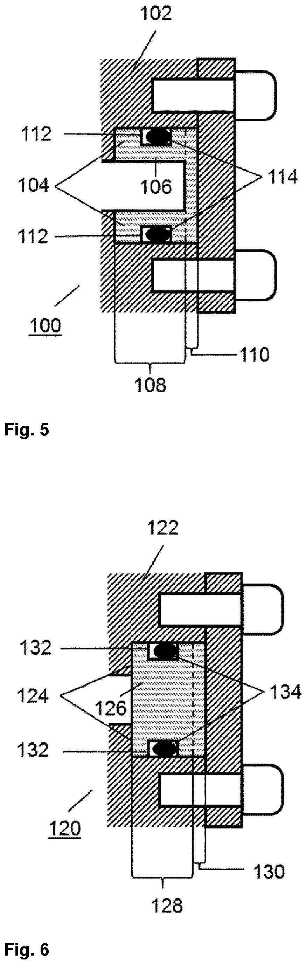

Fig. 5 zeigt einen exemplarischen Hydraulikstopfen 100. Der Hydraulikstopfen 100 weist einen monolithischen Grundkörper 106 auf, welcher einen ersten hohlzylindrischen Bereich 108 und einen axial angrenzenden zweiten zylindrischen Verschlussbereich 110 umfasst. Diese Ausführungsart führt zu der dargestellten Dünnwandigkeit des dargestellten Grundkörpers 106 in dem hohlzylindrischen Bereich 108, welcher vergleichbar ist mit dem dünnwandigen Bereich der Hydraulikverbindungsbuchse. Die Dünnwandigkeit bewirkt wiederum ein Anlegen der äußeren Mantelfläche des Grundkörpers 106 an der inneren Mantelfläche der Hydraulikleitung 102 auch bei geringem Innendruck. Die Ringnut 112 läuft um den ersten hohlzylindrischen Bereich 108 um.

In der dargestellten Figur ist die Hydraulikleitung 102 in Axialrichtung stirnseitig mit einer Abschlussplatte verschraubt, wodurch der Grundkörper 106 gegenüber der Hydraulikleitung in Axialrichtung fixiert ist.

Fig. 6 zeigt einen weiteren exemplarischen Hydraulikstopfen, bei welchem der eigentlich hohlzylindrische Bereich 128 des Grundkörpers 126 vollzylindrisch ausgeführt ist. Durch die vollzylindrische Ausführung des Bereiches 128 wirkt der Innendruck auf die der Hydraulikleitung 122 zugewandten Stirnseite des Grundkörpers 126. In den Grundkörper 126 ist eine Ringnut um den Bereich 128 eingelassen, in welche ein Dichtring 134 eingesetzt ist. Der Grundkörper 126, mit eingesetztem Dichtring 134, ist wiederum in die stirnseitige Bohrung 124 der Hydraulikleitung 122 eingesetzt. Eine stirnseitig mit der Hydraulikleitung 126 verschraubte Platte fixiert den Grundkörper 126 in Axialrichtung.

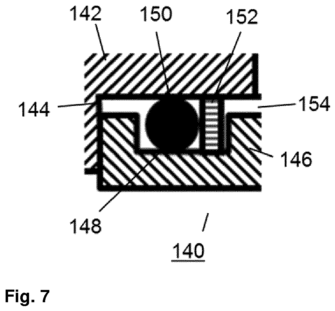

Fig. 7 zeigt einen Ausschnitt des Bereichs um den Dichtring einer Hydraulikverbindungsbuchse oder eines Hydraulikstopfens des Stands der Technik in einer Ausschnittskizze 140. In die stirnseitige Bohrung 144 der Hydraulikleitung 142 ist ein Grundkörper 146 einer Hydraulikverbindungsbuchse eingesetzt. In die Ringnut 148 des Grundkörpers ist ein Dichtring 150 eingesetzt. Zwischen Hydraulikleitung 142 und Grundkörper 146 ist montagebedingt ein Spalt 154 vorhanden. Der Stützring 152 sitzt vor dem Dichtring 150 in der Ringnut 148 und verhindert die Extrusion des Dichtringes 150 in den niederdruckseitigen Spalt 154.

### Bezugszeichenliste

- 10: erste Hydraulikverbindungsbuchse
- 12: erster Grundkörper
- 14: erste Ringnut des ersten Grundkörpers
- 16: zweite Ringnut des ersten Grundkörpers
- 18: erster Dichtring des ersten Grundkörpers
- 20: zweiter Dichtring des ersten Grundkörpers
- 22: Außendurchmesser Hydraulikverbindungsbuchse

- 50: exemplarische Hydraulikverbindung
- 52: erste Hydraulikleitung
- 54: zweite Hydraulikleitung
- 56: erste stirnseitige Bohrung
- 58: zweite stirnseitige Bohrung
- 60: zweiter Grundkörper
- 62: erste Ringnut des zweiten Grundkörpers
- 64: zweite Ringnut des zweiten Grundkörpers
- 66: erster Dichtring des zweiten Grundkörpers
- 68: zweiter Dichtring des zweiten Grundkörpers
- 70: Durchmesser Bohrungen

- 72: exemplarische zweite Hydraulikverbindung
- 73: dritte Hydraulikleitung
- 74: vierte Hydraulikleitung
- 75: dritte stirnseitige Bohrung
- 76: vierte stirnseitige Bohrung
- 77: dritter Grundkörper
- 78: dritte Ringnut des dritten Grundkörpers
- 79: vierte Ringnut des dritten Grundkörpers
- 80: dritter Dichtring des dritten Grundkörpers
- 81: vierter Dichtring des dritten Grundkörpers
- 82: Durchmesser Bohrungen

- 88: exemplarisches Hydrauliksystem
- 90: hydraulische Quelle
- 92: dritte Hydraulikleitung
- 94: vierte Hydraulikleitung
- 96: Hydraulikverbindung
- 98: hydraulischer Leistungsschalterantrieb

- 100: exemplarischer erster Hydraulikstopfen
- 102: dritte Hydraulikleitung
- 104: dritte stirnseitige Bohrung
- 106: vierter Grundkörper
- 108: hohlzylindrischer Bereich
- 110: zylindrischer Verschlussbereich
- 112: Ringnut des vierten Grundkörpers
- 114: erster Dichtring des vierten Grundkörpers

- 120: exemplarischer zweiter Hydraulikstopfen
- 122: vierte Hydraulikleitung
- 124: vierte stirnseitige Bohrung
- 126: fünfter Grundkörper
- 128: hohlzylindrischer Bereich
- 130: zylindrischer Verschlussbereich
- 132: Ringnut des fünften Grundkörpers
- 134: erster Dichtring des fünften Grundkörpers

- 140: Ausschnitt einer Hydraulikverbindung des Stands der Technik
- 142: Fünfte Hydraulikleitung
- 144: Fünfte stirnseitige Bohrung
- 146: sechster Grundkörper
- 148: Ringnut des sechsten Grundkörpers
- 150: erster Dichtring des sechsten Grundkörpers
- 152: Stützring
- 154: Spalt zwischen fünfter Hydraulikleitung und sechstem Grundkörper

## Patentansprüche

1. Hydraulikverbindung (50, 72, 96) umfassend
• wenigstens eine erste und eine zweite Hydraulikleitung (52, 54, 73, 74, 92, 94) für Leistungsschalterantriebe (98) und
• eine Verbindungsbuchse umfassend einen hohlzylindrischen Grundkörper (12, 60, 77) mit wenigstens zwei auf dessen äußerer Mantelfläche umlaufenden Ringnuten (14, 16, 62, 64, 78, 79) mit darin eingesetzten Dichtringen (18, 20, 66, 68, 80, 81), wobei
• die Hydraulikleitungen (52, 54, 73, 74, 92, 94) aus einem Material mit einem zweiten Elastizitätsmodul gefertigt sind,
• die Verbindungsbuchse überlappend in die stirnseitig aneinander anliegenden Hydraulikleitungen (52, 54, 73, 74, 92, 94) eingesetzt ist,
• ein Spalt zwischen dem Grundkörper (12, 60, 77) und den Hydraulikleitungen (52, 54, 73, 74, 92, 94) gebildet ist, und
• der Grundkörper der Verbindungsbuchse aus einem Material mit einem ersten Elastizitätsmodul gefertigt ist, welches kleiner ist als das zweite Elastizitätsmodul, so dass bei Beaufschlagung der Hydraulikverbindung (50, 72, 96) mit einem Innendruck eine stärkere Aufweitung des hohlzylindrischen Grundkörpers (12, 60, 77) als der Hydraulikleitungen (52, 54, 73, 74, 92, 94) bewirkt ist,
wobei der hohlzylindrische Grundkörper (12, 60, 77) als Spritzgussteil aus einem Kunststoff gefertigt ist oder eine von einem Kunststoff umspritzte Metallbuchse ist, wobei
• die Hydraulikleitungen jeweils wenigstens einen der Dichtringe umschließen, woraus unabhängig vom Systemdruck eine Dichtwirkung resultiert,
• der Grundkörper (60, 77) so angeordnet ist, dass er sich ab einer Beaufschlagung mit einem hydraulischen Druck von 50 bar soweit aufweitet, dass der Spalt im Bereich der Dichtringe geschlossen wird, so dass die Dichtringe auch bei niedrigem Druck nicht in den Spalt extrudiert werden.

2. Hydraulikverbindung (50, 72, 96) nach Anspruch 1 **dadurch gekennzeichnet, dass** die Achsen der Ringnuten (14, 16, 62, 64, 78, 79) deckungsgleich angeordnet sind.

3. Hydraulikverbindung (50, 72, 96) nach einem der vorherigen Ansprüche, **dadurch gekennzeichnet, dass** der hohlzylindrische Grundkörper (12, 60, 77) aus erosionsfestem Material, insbesondere Polyamid, gefertigt ist.

4. Hydraulikverbindung (50, 72, 96) nach einem der vorherigen Ansprüche, **dadurch gekennzeichnet, dass** die Bohrung (56, 58, 75, 76) der jeweiligen Hydraulikleitung eine Fase längs zur Rotationsachse des Grundkörpers (77) aufweist.

5. Hydraulikverbindung (50, 72, 96) nach einem der vorherigen Ansprüche, **dadurch gekennzeichnet, dass** wenigstens eine der Hydraulikleitungen (52, 54, 73, 74, 92, 94) durch einen Hydraulikkanal eines Leistungsschalterantriebes gebildet ist.

## Claims

1. Hydraulic connection (50, 72, 96) comprising:
- at least one first and one second hydraulic line (52, 54, 73, 74, 92, 94) for power switch drives (98); and
- a connecting bush comprising a hollow-cylindrical main body (12, 60, 77) having at least two annular grooves (14, 16, 62, 64, 78, 79) which encircle the external sleeve face of said main body (12, 60, 77) and have annular seals (18, 20, 66, 68, 80, 81) which are inserted in said annular grooves (14, 16, 62, 64, 78, 79); wherein
- the hydraulic lines (52, 54, 73, 74, 92, 94) are made of a material having a second elasticity modulus;
- the connecting bush is inserted in an overlapping manner into the hydraulic lines (52, 54, 73, 74, 92, 94) which at their end sides mutually abut;
- a gap is formed between the main body (12, 60, 77) and the hydraulic lines (52, 54, 73, 74, 92, 94); and
- the main body of the connecting bush is made of a material having a first elasticity modulus which is lower than the second elasticity modulus, such that when the hydraulic connection (50, 72, 96) is impinged with an internal pressure the hollow-cylindrical main body (12, 60, 77) is caused to widen more than the hydraulic lines (52, 54, 73, 74, 92, 94);
wherein the hollow-cylindrical main body (12, 60, 77) is made as an injection-molded part from a plastics material or is a metal bush insert-molded in a plastics material, wherein
- the hydraulic lines in each case enclose at least one of the annular seals, on account of which a sealing effect results independently of the system pressure;
- the main body (60, 77) is disposed such that when impinged with a hydraulic pressure of from 50 bar it is widened to the extent that the gap in the region of the annular seals is closed, such that the annular seals are not extruded into the gap even at low pressure.

2. Hydraulic connection (50, 72, 96) according to Claim 1, **characterized in that** the axes of the annular grooves (14, 16, 62, 64, 78, 79) are disposed so as to be congruent.

3. Hydraulic connection (50, 72, 96) according to one of the preceding claims, **characterized in that** the hollow-cylindrical main body (12, 60, 77) is made of an erosion-resistant material, in particular polyamide.

4. Hydraulic connection (50, 72, 96) according to one of the preceding claims, **characterized in that** the bore (56, 58, 75, 76) of the respective hydraulic line has a chamfer which is longitudinal to the rotation axis of the main body (77).

5. Hydraulic connection (50, 72, 96) according to one of the preceding claims, **characterized in that** at least one of the hydraulic lines (52, 54, 73, 74, 92, 94) is formed by a hydraulic duct of a power switch drive.

## Revendications

1. Liaison hydraulique (50, 72, 96), comprenant
* au moins une première et une deuxième conduite hydraulique (52, 54, 73, 74, 92, 94) pour un mécanisme d'entraînement de commutateur de puissance (98) et
* une douille de liaison comprenant un corps de base (12, 60, 77) cylindrique creux muni d'au moins deux rainures annulaires (14, 16, 62, 64, 78, 79) circonférentielles sur son enveloppe externe dans lesquelles sont insérées des bagues d'étanchéité (18, 20, 66, 68, 80, 81),
* les conduites hydrauliques (52, 54, 73, 74, 92, 94) étant fabriquées en un matériau ayant un deuxième module d'élasticité,
* la douille de liaison étant insérée avec chevauchement dans les conduites hydrauliques (52, 54, 73, 74, 92, 94) appliquées l'une contre l'autre du côté frontal,
* un interstice étant formé entre le corps de base (12, 60, 77) et les conduites hydrauliques (52, 54, 73, 74, 92, 94), et
* le corps de base de la douille de liaison étant fabriqué dans un matériau ayant un premier module d'élasticité qui est inférieur au deuxième module d'élasticité, de sorte que la mise en charge de la liaison hydraulique (50, 72, 96) avec une pression interne produit un élargissement plus important du corps de base (12, 60, 77) cylindrique creux que des conduites hydrauliques (52, 54, 73, 74, 92, 94)
le corps de base (12, 60, 77) cylindrique creux étant fabriqué en tant que pièce moulée par injection en une matière plastique ou étant une douille métallique surmoulée de matière plastique,
* les conduites hydrauliques entourant respectivement au moins l'une des bagues d'étanchéité, ce qui résulte en un effet d'étanchéité indépendant de la pression du système,
* le corps de base (60, 77) étant disposé de telle sorte qu'à partir d'une mise en charge avec une pression hydraulique de 50 bar, il s'élargit au point que l'interstice dans la zone des bagues d'étanchéité est fermé, de sorte que les bagues d'étanchéité ne peuvent pas être extrudées dans l'interstice même en présence d'une faible pression.

2. Liaison hydraulique (50, 72, 96) selon la revendication 1, **caractérisée en ce que** les axes des rainures annulaires (14, 16, 62, 64, 78, 79) sont disposés en coïncidence.

3. Liaison hydraulique (50, 72, 96) selon l'une des revendications précédentes, **caractérisée en ce que** le corps de base (12, 60, 77) cylindrique creux est fabriqué dans un matériau résistant à l'érosion, notamment en polyamide.

4. Liaison hydraulique (50, 72, 96) selon l'une des revendications précédentes, **caractérisée en ce que** l'alésage (56, 58, 75, 76) de la conduite hydraulique respective possède un chanfrein le long de l'axe de rotation du corps de base (77).

5. Liaison hydraulique (50, 72, 96) selon l'une des revendications précédentes, **caractérisée en ce qu'**au moins l'une des conduites hydrauliques (52, 54, 73, 74, 92, 94) est formée par un canal hydraulique d'un mécanisme d'entraînement de commutateur de puissance.
